# EUROPÄISCHE PATENTSCHRIFT

(11) **EP 0 977 805 B1**
(45) Veröffentlichungstag und Bekanntmachung des Hinweises auf die Patenterteilung: **21.11.2001**
(21) Anmeldenummer: 98922708.7
(22) Anmeldetag: 14.04.1998
(51) Int. Cl.: C08K 9/02, C08K 9/04, C08L 21/00

(54) **OBERFLÄCHENMODIFIZIERTE, OXIDISCHE ODER SILIKATISCHE FÜLLSTOFFE UND IHRE VERWENDUNG**
SURFACE-MODIFIED, OXIDIC OR SILICATED FILLING MATERIALS AND THE USE THEREOF
CHARGES MODIFIEES EN SURFACE PAR VOIE D'OXYDATION OU ADJONCTION DE COMPOSES SILICATES ET LEUR UTILISATION

(30) Priorität: 22.04.1997 DE 19717091
(43) Veröffentlichungstag der Anmeldung: 09.02.2000
(73) Patentinhaber: BAYER AG, 51368 Leverkusen (DE)
(72) Erfinder: SCHOLL, Thomas, D-51469 Bergisch Gladbach (DE)
(86) Internationale Anmeldenummer: EP9802177
(87) Internationale Veröffentlichungsnummer: WO9847955

(56) Entgegenhaltungen:
- EP-A- 0 753 549
- GB-A- 1 290 860
- GB-A- 2 083 011
- US-A- 2 727 876

## Beschreibung

Die vorliegende Erfindung betrifft neue oberflächenmodifizierte, oxidische oder silikatische Füllstoffe und ihre Verwendung zur Herstellung von Kautschukmischungen und -vulkanisaten. Die mit diesen modifizierten Füllstoffen erhaltenen Kautschukmischungen eignen sich zur Herstellung von hochverstärkten, abriebbeständigen Formkörpern, insbesondere zur Herstellung von Reifen, die einen niedrigen Rollwiderstand und einen hohen Abriebwiderstand aufweisen.

Die Behandlung von Füllstoffoberflächen zur Verbesserung der Füllstoff-/Matrix-Ankopplung in thermoplastischen und duroplastischen Verbundwerkstoffen sowie gefüllten Kautschuksystemen ist bekannt. So beschreiben US-PS 4,514,231 und 4,704,414 die Behandlung von Füllstoffen mit polysulfidischen Silylethern der Struktur (Rₙ¹(RO)₃₋ₙSi-(Alk)ₘ-Ar)ₚ)₂ (S)ₓ, insbesondere Bis-(triethoxisilyl-propyl)-tetrasulfid. Für die Herstellung hochverstärkter und abriebbeständiger Kautschukartikel eignet sich gemäß DE-2 141 159 und 2 255 577 auch die Zugabe der gleichen polysulfidischen Silylether zur Mischung aus Kautschuk und unbehandeltem Füllstoff ("In situ-Oberflächenmodifizierung"). Nachteilig an der Verwendung von polysulfidischen Silylethern zur Verbesserung der Füllstoff-/Matrix-Ankopplung ist ihr aufwendiges Herstellverfahren und die hohen Rohstoffkosten.

US-PS 2,736,669 und 2,801,185 beschreiben ein Verfahren zur Hydrophobierung von Kieselsäuren, welches auf der Behandlung von Kieselsäuren mit Alkoholen bei bestimmten Temperaturen beruht. Die so behandelte Kieselsäure zeigt jedoch keine verbesserte Verstärkungswirkung in einer Kautschukmatrix.

Es wurde jetzt gefunden, daß die Veresterung von oxidischen und silikatischen Füllstoffen mit hydroxylgruppenhaltigen ungesättigten Verbindungen und Behandlung mit Schwefel und/oder einem Schwefelspender zu wirkungsvollen neuen Füllstoffen führt, deren Vorteile auf der einen Seite in den erheblich reduzierten Rohstoffkosten gegenüber dem Kieselsäure/Silan-System liegen und auf der anderen Seite in dem deutlich verbesserten rheologischen Verhalten der Kautschukmischung (niedrige Mischungsviskosität, geringe Spritzquellung), dem deutlich günstigeren dynamischen Dämpfungsverhalten (geringer Heat built up, niedriger Rollwiderstand) der hiermit hergestellten Kautschukvulkanisate sowie dem verbesserten Alterungsverhalten der Vulkanisate unter thermischer und dynamischer Belastung (Reversionsbeständigkeit) verbunden mit einer hohen Abriebbeständigkeit.

Gegenstand der vorliegenden Erfindung sind daher oberflächenbehandelte, oxidische oder silikatische Füllstoffe, hergestellt durch Veresterung eines oxidischen oder silikatischen Füllstoffes mit 0,1 bis 50 Gew.-Teilen einer hydroxylgruppenhaltigen ungesättigten Verbindung und Behandlung mit 0,1 bis 50 Gew.-Teilen Schwefel (jeweils bezogen auf 100 Gew.-Teile eingesetzten Füllstoff) oder Schwefelspender, wobei die beiden Vorgänge entweder nacheinander oder gemeinsam durchgeführt werden können.

Die Reaktionstemperaturen für die Veresterung der hydroxylgruppenhaltigen ungesättigten Verbindungen mit dem oxidischen oder silikatischen Füllstoff liegt hierbei bei Raumtemperatur (25°C) bis Zersetzungstemperatur der hydroxylgruppenhaltigen Verbindung, bevorzugt bei 50 bis 250°C, und die Temperatur zur Behandlung des Schwefels bei Raumtemperatur bis 250°C, bevorzugt 120 bis 200°C.

Die Umsetzungen können in Substanz oder in einem Lösungsmittel, gegebenenfalls unter Anwendung von Vakuum oder Druck von 1 bis 100 atm und auch in Gegenwart weiterer Vulkanisationschemikalien, wie Beschleuniger, Verzögerer, Alterungsschutzmittel, Weichmacher und weiterer Kautschukvernetzer durchgeführt werden.

Die erfindungsgemäßen oberflächenbehandelten oxidischen und silikatischen Füllstoffe stellen teilhydrophobierte bis vollständig hydrophobierte Pulver mit Methanolbenetzbarkeiten von 0 bis 55 % dar. Hierbei gibt die Methanolbenetzbarkeit den minimalen Anteil an Methanol (in Gewichtsprozent) in einem Methanol/Wasser-Gemisch an, welches in der Lage ist, den Füllstoff zu benetzen. Die Methode zur Bestimmung der Methanolbenetzbarkeit ist im experimentellen Teil der vorliegenden Patentanmeldung beschrieben.

Unter oxidischen und silikatischen Füllstoffen sind alle bekannten natürlichen oder synthetischen anorganische Füllstoffe zu verstehen, die aufgrund eines Gehalts an Hydroxyl- oder Oxidgruppen oberflächlich mit den hydroxylgruppenhaltigen ungesättigten Verbindungen unter Wasserabspaltung reagieren können. Dies sind beispielsweise: gefällte oder pyrogene Kieselsäure, Aluminiumhydroxid, Aluminiumsilikat, Calciumsilikat, Calciumsulfat, China Clay oder Calcinierter Clay.

Besonders bevorzugt sind:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen.
- Synthetische Silikate, wie Aluminiumsilikat, Erdalkalisilikate wie Magnesiumsilikat oder Calciumsilikat, mit BET-Oberflächen von 20-400 m²/g und Primärteilchendurchmessern von 10-400 nm.
- Natürliche Silikate, wie Kaolin und andere natürlich vorkommende Kieselsäuren,
- Glasfasern und Glasfaserprodukte (Matten, Stränge) oder Mikroglaskugeln,
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat,
- Metallhydroxide, wie z.B. Aluminiumhydroxid, Magnesiumhydrosid.

Das Molekulargewicht der hydroxylgruppenhaltigen ungesättigten Verbindungen hat einen Einfluß auf die verfahrenstechnische Durchführung der Reaktion mit den Füllstoffen. So sind für flüchtige niedermolekulare hydroxylgruppenhaltige ungesättigte Verbindungen Vorkehrungen zu treffen, daß sie bei den hohen Reaktionstemperaturen nicht entweichen, beispielsweise durch die Anwendung von Druck von 1-100 atm, während bei hochpolymeren hydroxylgruppenhaltigen ungesättigten Verbindungen die hohe Viskosität die Verwendung von Lösungsmitteln oder den Einsatz als wäßrigen Latex erfordert. Die hydroxylgruppenhaltigen ungesättigten Verbindungen können niedermolekular oder polymer sein mit Molgewichten von 58 (Alkylalkohol) bis 500 000. Bevorzugt werden Molgewichte von 150-10 000. Ganz besonders bevorzugt werden hydroxylgruppenhaltige ungesättigte Verbindungen mit Molgewichten von 200-5000.

Der Hydroxylgruppengehalt der Verbindungen ist so bemessen, daß mindestens eine Hydroxylgruppe im Molekül enthalten ist, bevorzugt 0,1-15 Hydroxylgruppen pro 1000 Atommasseneinheiten, und OH-Zahlen von 4-800. Ganz besonders werden Verbindungen bevorzugt mit OH-Zahlen von 4-400. Die OH-Zahl nach DIN 53 240 gibt an, wieviel mg KOH der Essigsäuremenge äquivalent sind, die von 1 g Substanz bei der Acetylierung chemisch gebunden wird. Primäre und sekundäre Hydroxylgruppen werden gegenüber tertiär gebundenen Hydroxylgruppen bevorzugt.

Die Anzahl der Doppelbindungen in den Verbindungen ist so bemessen, daß mindestens eine Doppelbindung im Molekül enthalten ist, bevorzugt 0,2-18 Doppelbindungen pro 1000 Molgewichtseinheiten, entsprechend Jodzahlen von 5-470. Ganz besonders bevorzugte Jodzahlen liegen im Bereich von 35-470. Die Bestimmung der Jodzahlen erfolgt im allgemeinen durch Addition von Jodchlorid in Essigsäure nach Wijs, DIN 53 241, Teil 1. Die Jodzahl definiert die Jodmente in Gramm, die von 100 g Substanz chemisch gebunden wird.

Neben den Hydroxylgruppen können die Verbindungen weitere funktionelle Gruppen enthalten, beispielsweise Carbonsäure und deren Metallsalze, Carbonsäureester, Carbonsäureamid, Sulfonsäure und deren Metallsalze, Sulfonsäureester und Sulfongruppen, Aminogruppen, Phosphorsäurereste und Phosphorigsäure sowie deren Ester, Silylether und Halogenatome. Durch geeignete Auswahl dieser weiteren funktionellen Gruppen läßt sich die Wirkung der oberflächenmodifizierten, oxidischen und silikatischen Füllstoffe weiter verbessern. Bevorzugte weitere Substituenten sind Carbonsäure- und deren Salze sowie Carbonsäureestergruppen.

Besonders bevorzugte hydroxylgruppenhaitige ungesättigte Verbindungen sind Allylalkohol, Propargylalkohol, 1,4-Butendiol, 2-Methylen-1,3-propandiol, 2-Hexen-1-ol, 5-Hexen-1,2-diol, 1,5-Hexadien-3,4-diol, 3-Cyclohexen-1,1-dimethanol, 1-Octen-3-ol, 10-Undecen-1-ol (Undecylenalkohol), Dodecenalkohol, Hexadecenol, Oleylalkohol, Ricinolsäure, Zimtalkohol, Ricinusöl, Hydroxiethyl-(meth)-acrylat, 4-Hydroxibutyl-(meth)-acrylat, hydroxylgruppenhaltiges Pofybutadienöl mit bevorzugten OH-Zahlen von 20-200 (Poly BD Resins der Elf Atochem oder Hycar HT der BFGoodrich), hydroxylgruppenhaltige ungesättigte Polyester mit mittleren Molgewichten von 1000 bis 20 000, hydroxylgruppenhaltige ungesättigte Polyether, wie Additionsprodukte aus 1-200 mol Ethylenoxid und/oder Propylenoxid pro mol ungesättigten Alkohol.

Bevorzugt werden Produkte, hergestellt aus 0,1-50 Gew.-Teilen hydroxygruppenhaltiger ungesättigter Verbindung, besonders bevorzugt 5-25 Gew.-Teile, pro 100 Gew.-Teile oxidischer oder silikatischer Füllstoff.

Die hydroxylgruppenhaltigen ungesättigten Verbindungen können alleine oder im Gemisch eingesetzt werden oder auch im Gemisch mit hydroxylgruppenfreien, gesättigten oder ungesättigten Verbindungen, die dann gegebenenfalls an der Folgereaktion mit Schwefel oder einem Schwefelspender nicht teilnehmen und an den Füllstoff lediglich physikalisch gebunden werden, eingesetzt werden. Beispiele für letztgenannte sind Silikonöle, Paraffinöle und Mineralöle.

Die Umsetzung der Füllstoffe mit den hydroxylgruppenhaltigen Verbindungen kann in Substanz oder in organischen Lösungsmitteln oder im Vakuum bei Temperaturen oberhalb von Raumtemperatur bis unterhalb der Zersetzungstemperatur der hydroxylgruppenhaltigen Verbindung erfolgen. Zur Durchführung der Veresterung bei Temperaturen unter 100°C empfiehlt sich eine vorherige Hitzebehandlung des oxidischen oder silikatischen Füllstoffs bei Temperaturen von 300-800°C, wie sie in US-PS 2,736,669 beschrieben ist. Ansonsten werden Temperaturen von 100°C bis unterhalb der Zersetzungstemperatur der hydroxylgruppenhaltigen Verbindung bevorzugt. Die oxidischen oder silikatischen Füllstoffe können auch als wasserfeuchte Produkte oder gar als Aufschlämmung in Wasser vorgelegt werden. Die Restfeuchte wird mit dem bei der Reaktion gebildeten Wasser aus dem Reaktionsprodukt entfernt. Die Entfernung des Reaktionswassers geschieht vorteilhafterweise sofort während der Reaktion oder in einem nachgeschalteten Trockungsschritt. Der Erfolg der Veresterung läßt sich beispielsweise dadurch nachweisen, daß sich mit geeigneten Lösungsmitteln die hydroxylgruppenhaltige Verbindung nicht mehr extrahieren läßt.

Geeignete Lösungsmittel zur Durchführung der Oberflächenmodifizierung sind beispielsweise gesättigte oder ungesättigte aliphatische oder aromatische Kohlenwasserstoffe, chlorierte aliphatische oder chlorierte aromatische Kohlenwasserstoffe sowie Alkohole.

Die Behandlung mit Schwefel oder einem Schwefelspender kann entweder gleichzeitig mit der Reaktion zwischen Füllstoff und hydroxylgruppenhaltiger ungesättigter Verbindung als auch in einem nachgeschalteten Reaktionsschritt erfolgen. Bevorzugt wird mit einem nachgeschalteten Reaktionsschritt gearbeitet, um den vollständigen Ablauf der Kondensationsreaktion aus dem ersten Reaktionsschritt sicherzustellen. Die Behandlung mit Schwefel oder Schwefelspender kann durch einfache physikalische Vermischung der Komponenten mit dem veresterten Füllstoff oder, bevorzugt, durch Vermischen und anschließende chemische Reaktion erfolgen. Unter dem Begriff Schwefelspender werden Substanzen verstanden, die unter Vulkanisationsbedingungen zu Additionsprodukten von Schwefel an die ungesättigte Komponente führen. Als Schwefelspender eignen sich beispielsweise Dithiodimorpholin, Dithio-dicaprolactam, Bis-(dioctyldithiophosphorsäure)-tetrasulfid oder auch Dischwefeldichlorid. Bevorzugte Mengen von Schwefel oder Schwefelspendern sind 0,1 bis 20 Gew.-Teile, bezogen auf 100 Gew.-Teile oxidischen oder silikatischen Füllstoff; besonders bevorzugt werden 0,5 bis 10 Gew.-Teile Schwefel oder Schwefelspender pro 100 Gew.-Teile Füllstoff eingesetzt. Die Misch- bzw. Reaktionstemperaturen liegen bei Raumtemperatur bis 250°C, bevorzugt 100-200°C. Die Misch- bzw. Reaktionszeiten betragen wenige Minuten bis zu mehreren Stunden. Darüberhinaus können weitere übliche Vulkanisationschemikalien und Vulkanisationshilfsmittel, insbesondere Zinkoxid oder Zinksalze von aliphatischen oder aromatischen Carbonsäuren zugesetzt werden. Beispiele für geeignete Vulkanisationsbeschleuniger sind Mercaptobenzthiazol, Mercaptobenzthiazolsulfenamide, wie z.B. die entsprechenden N-tert.-Butyl-, N-Cyclohexyl-, N,N-Dicyclohexylsulfenamide, Dithio-dibenzthiazol, Guanidine, wie z.B. Diphenylguanidin und Di-o-tolylguanidin, Thiurame, wie z.B. Tetrabenzylthiuram-disulfid, Dithiocarbamate, wie z.B. Zink-dibenzyldithiocarbamat, Thiohamstoffe, wie z.B. Diphenylthioharnstoff, Thiocarbonate, sowie Peroxide. Beispiel für einen geeigneten Vulkanisationsverzögerer ist N-Cyclohexyl-thio-phthalimid. Ferner können Silicium-haltige Füllstoffaktivatoren, wie z.B. Bis-(triethoxisilylpropyl)-tetrasulfid, Thiocyanatopropyltriethoxisilan (DE-OS 19 544 469) oder solche der EP 466 066 zugesetzt werden. Die bevorzugten Mengen dieser zusätzlichen Vulkanisationshilfsmittel liegen jeweils bei 0,1 bis 300 Gew.-Teilen pro 100 Gew.-Teil Schwefel oder Schwefelspender. Bevorzugt werden 0,1-25 Gew.-Teile pro 100 Gew.-Teile Schwefel.

Für die Herstellung von Kautschukvulkanisaten mit Hilfe der oberflächenmodifizierten Füllstoffe eignen sich neben Naturkautschuk auch Synthesekautschuke. Synthesekautschuke sind beispielsweise bei W. Hofmann, Kautschuktechnologie, Gentner Verlag, Stuttgart 1980, beschrieben. Sie umfassen u.a.
- BR -: Polybutadien
- ABR -: Butadien/Acrylsäure-C₁₋₄-alkylester-Copolymere
- CR -: Polychloropren
- IR -: Polyisopren
- SBR -: Styrol/Butadien-Copolymerisate mit Styrolgehalten von 1-6, vorzugsweise 20-50 Gew.-%
- IIR -: Isobutylen/Isopren-Copolymerisate
- NBR -: Butadien/Acrylnitril-Copolymere mit Acrylnitrilgehalten von 5-60, vorzugsweise 10-40 Gew.-%.
- HNBR -: teilhydrierter oder vollständig hydrierter NBR-Kautschuk
- EPDM -: Ethylen/Propylen/Dien-Copolymerisate
sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen modifiziert sein können, wie z.B. in der EP-A 447 066 beschrieben, Polybutadienkautschuk mit hohem 1,4-cis-Gehalt (> 90 %), der mit Katalysatoren auf Basis Ni, Co, Ti oder Nd hergestellt wird, sowie Polybutadienkautschuk mit einem Vinylgehalt von 0-75 % sowie deren Mischungen von Interesse.

Neben den erfindungsgemäßen oberflächenmodifizierten oxidischen und silikatischen Füllstoffen können die Kautschukmischungen weitere Füllstoffe enthalten. Dies sind neben unbehandelten oxidischen und silikatischen Füllstoffen auch Ruße. Bevorzugte weitere Füllstoffe sind z.B.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen.
- synthetische Silikate, wie Aluminiumsilikat, Erdalkalisilikat wie Magnesiumsilikat oder Calciumsilikat, mit BET-Oberflächen von 20 bis 400 m²/g und Primärteilchendurchmessern von 10 bis 400 nm.
- natürliche Silikate, wie Kaolin und andere natürlich vorkommende Kieselsäure
- Glasfasern und Glasfaserprodukte (Matten, Stränge) oder Mikroglaskugeln
- Metalloxide, wie Zinkoxid, Calciumoxid, Magnesiumoxid, Aluminiumoxid
- Metallcarbonate, wie Magnesiumcarbonat, Calciumcarbonat, Zinkcarbonat
- Metallhydroxide, wie z.B. Aluminiumhydroxid, Magnesiumhydroxid
- Ruße. Die hierbei zu verwendenden Ruße sind nach dem Flammruß, Furnace- oder Gasrußverfahren hergestellt und besitzen BET-Oberflächen von 20 bis 200 m²/g, wie z.B. SAF-, ISAF-, HAF-, FEF- oder GPF-Ruße.

Besonders bevorzugt werden hochdisperse gefällte Kieselsäuren und Ruße. Die genannten Füllstoffe können alleine oder im Gemisch eingesetzt werden.

Die erfindungsgemäßen Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, Bis-(triethoxisilylpropyl)-tetrasulfid, Thiocyanatopropyltriethoxisilan oder solche der EP 466 066, die der Gummiindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1-50 Gew.-%, bezogen auf Kautschuk.

Aufgrund ihres Gehalts an freiem und/oder gebundenem Schwefel können die erfindungsgemäßen oberflächenbehandelten, oxidischen und silikatischen Füllstoffe auch alleine als Vernetzer bei der Vulkanisation dienen.

Als weitere bekannte Vernetzer können Schwefel, Schwefelspender oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vernetzungsbeschleuniger und Schwefel oder Peroxide werden in Mengen von 0,1 bis 10 Gew.-%, bevorzugt 0,1 bis 5 Gew.-%, bezogen auf Kautschuk, eingesetzt.

Die Vulkanisation kann bei Temperaturen von 100 bis 200°C, bevorzugt 130 bis 180°C, gegebenenfalls unter Druck von 10 bis 200 bar, erfolgen.

Die Abmischung der Kautschuke mit den oberflächenmodifizierten Füllstoffen kann in üblichen Mischaggregaten, wie Walzen, Innenmischern und Mischextrudern durchgeführt werden.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen.

### Beispiel 1

### Mit Oleylalkohol und Schwefel oberflächenbehandelte Kieselsäure

a) Umsetzung der Kieselsäure mit Oleylalkohol
   600 g Vulkasil S (hochaktive gefällte Kieselsäure mit BET-Oberfläche 180 m²/g der Bayer AG) und 120 g Oleylalkohol werden 4 Stunden unter Rühren auf 220-240°C (Ölbadtemperatur) erhitzt, wobei 40,5 g Wasser abdestillieren. Man erhält 668 g eines weißen Pulvers.
   Aus 20 g Produkt ließen sich durch Soxhlet-Extraktion mit siedendem Toluol 0,44 g eines hellen Öls, entsprechend 11 % des eingesetzten Oleylalkohols, wiedergewinnen.
b) Umsetzung mit Schwefel
   400 g des Produktes aus Reaktionsschritt 1 werden mit 26,6 g Schwefel gemischt und unter Rühren 5 Stunden auf 150°C erhitzt. Man erhielt 425 g eines grauen Pulvers.
   Methanolbenetzbarkeit: 40 %.

### Beispiel 2

### Mit Ricinusöl und Schwefel oberflächenbehandelte Kieselsäure

400 g Vulkasil S (hochaktive gefällte Kieselsäure mit BET-Oberfläche 180 m²/g der Bayer AG) und 80 g Ricinusöl wurden unter Rühren 2,5 Stunden auf 220-240°C (Ölbadtemperatur) erhitzt, wobei 30 g Wasser abdestillieren. Dann setzte man 25 g Schwefel hinzu und erhitzte weitere 7 Stunden auf 150°C. Man erhielt 472 g eines farblosen Pulvers.
Methanolbenetzbarkeit: 21 %.

### Beispiel 3

Es wurde wie in Beispiel 1 verfahren, indem man 440 g Vulkasil S erst mit 44 g Oleylalkohol und anschließend das gesamte Reaktionsprodukt mit 17,6 g Schwefel umsetzte. Man erhielt 477 g eines hellen Pulvers.
Methanolbenetzbarkeit: 26 %.

### Beispiel 4

### Mit Polybutadienöl und Schwefel oberflächenbehandelte Kieselsäure

400 g Vulkasil S (hochaktive gefällte Kieselsäure mit BET-Oberfläche 180 m²/g der Bayer AG) und 80 g hydroxylterminiertes Polybutadienöl mit einem mittleren Molgewicht von 1220 und der OH-Zahl 95 (Poly Bd R 20 LM der Atochem) werden unter Rühren 4 Stunden auf 200°C erhitzt, wobei 25 g Wasser abdestillieren. Dann setzt man 25 g Schwefel hinzu und erhitzt weitere 5 Stunden auf 150°C. Man erhielt 475 g eines farblosen Pulvers.
Methanolbenetzbarkeit: 20 %.

### Beispiel 5

### Mit Oleylalkohol und Schwefel in Gegenwart von ZnO und Beschleuniger oberflächenbehandelte Kieselsäure

440 g Vuikasil S (hochaktive gefällte Kieselsäure mit BET-Oberfläche 180 m²/g der Bayer AG) und 44 g Oleylalkohol werden 5 Stunden auf 220°C (Ölbadtemperatur) erhitzt, wobei 25 g Wasser abdestillieren. Dann setzt man 13,8 g Schwefel, 5,5 g ZnO und 2,75 g N-Cyclohexylmercaptobenzthiazol-sulfenamid hinzu und erhitzt 5 Stunden unter Rühren auf 150°C. Man erhielt 496 g eines farblosen Pulvers.

### Beispiel 6

500 g Vulkasil S (hochaktive Kieselsäure mit BET-Oberfläche 180 m²/g) und 60 g Oleylalkohol wurden bei Raumtemperatur gemischt und unter Rühren in einem Ölbad auf 220°C Badtemperatur erhitzt. Innerhalb 4 1/2 Stunden wurden ca. 33 ml Wasser abdestilliert. Dann setzte bei 170-180°C Badtemperatur unter Rühren 2,5 g Diphenylguanidin (Vulkacit D) hinzu und nach dem Abkühlen auf ca. 40°C 25 g Schwefelpulver hinzu und rührte 30 Minuten bei Raumtemperatur intensiv nach. Man erhielt 554 g modifizierte Kieselsäure als farbloses Pulver.

### Beispiel 7

500 g Vulkasil S (hochaktive Kieselsäure mit BET-Oberfläche 180 m²/g) und 50 g Oleylalkohol wurden bei Raumtemperatur gemischt und unter Rühren in einem Ölbad auf 210-220°C Badtemperatur erhitzt. Innerhalb von 4 1/2 Stunden wurden ca. 30 ml Wasser abdestilliert. Dann setzte man bei 130°C Badtemperatur unter Rühren 5 g Bis-(triethoxisilylpropyl)-tetrasulfid (Si 69, Degussa AG) und 25 g Schwefelpulver hinzu und rührte 5 Stunden bei 150°C nach. Man erhielt 550 g modifizierte Kieselsäure als farbloses Pulver.
Methanolbenetzbarkeit: 32 %.

### Beispiel 8

Die folgenden Kautschukmischungen wurden in einem 1,5 l Kneter bei 130°C hergestellt. Schwefel und Beschleuniger wurden zum Schluß auf der Walze bei 50°C zugegeben:

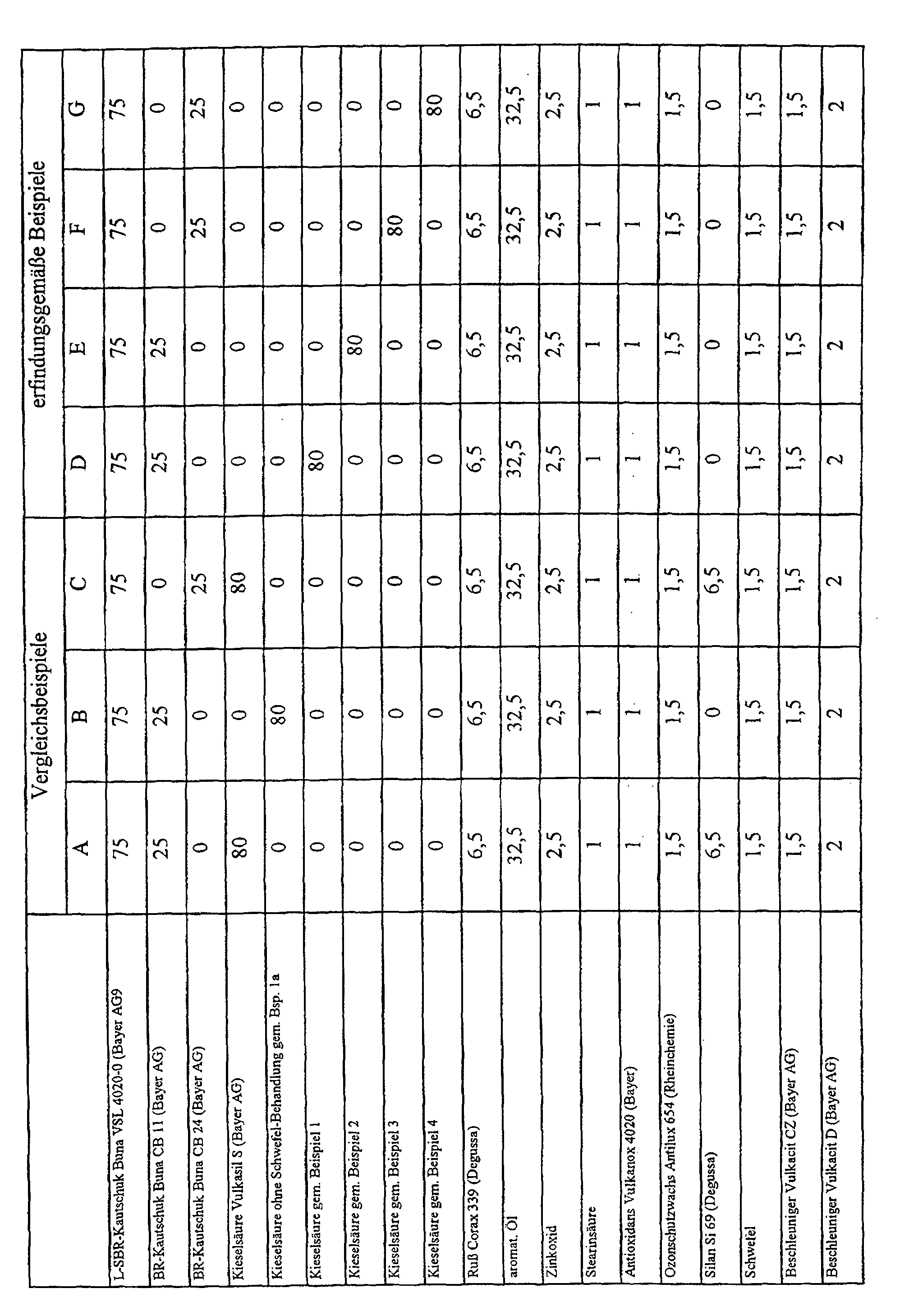

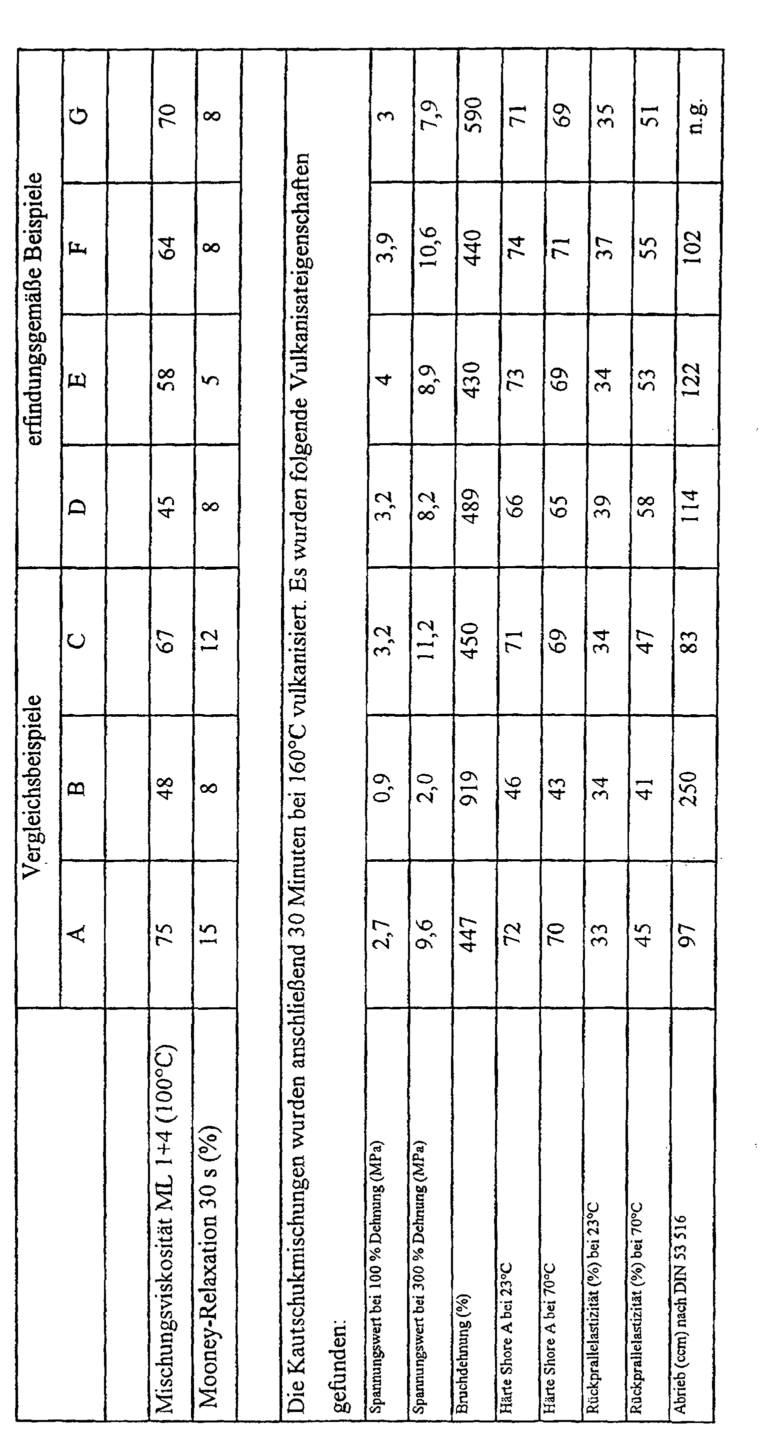

Neben dem verbesserten Verarbeitungsverhalten der unvulkanisierten Kautschukmischungen, das sich in der niedrigen Mooney-Viskosität manifestiert, weisen die Vulkanisateigenschaften bei Einsatz der erfindungsgemäßen oberflächenmodifizierten Füllstoffe erhebliche Vorteile in der dynamischen Dämpfung bei 70°C auf, die erfahrungsgemäß mit einem geringeren Rollwiderstand von Kraftfahrzeugreifen korreliert.

Unterläßt man die Schwefel-Umsetzung der mit einer hydroxylgruppenhaltigen ungesättigten Verbindung behandelten Kieselsäure (Anwendungsbeispiel 6 B), so ist kein Verstärkungseffekt des Füllstoffs festzustellen.

### Beispiel 9

Die folgenden Kautschukmischungen wurden in einem 1,5 l Kneter bei 150°C hergestellt. Schwefel und Beschleuniger wurden zum Schluß bei 50°C auf einer Walze zugemischt:

| | Vergleichs-beispiel **H** | erfindungsg. Beispiel **J** |
|---|---|---|
| L-SBR-Kautschuk Buna VSL 5025-1 (Bayer AG) | 96 | 96 |
| BR-Kautschuk Buna CB 24 (Bayer AG) | 30 | 30 |
| gefällte Kieselsäure Vulkasil S (Bayer AG) | 80 | 0 |
| Bis-(triethoxisilylpropyl)tetrasulfid (Si 69, Degussa) | 6,5 | 0 |
| Kieselsäure gemäß Beispiel 6 | 0 | 88 |
| Ruß N 339 (Degussa) | 6,5 | 6,5 |
| Stearinsäure | 1 | 1 |
| aromat. Weichmacher | 8 | 8 |
| Zinkoxid | 2,5 | 2,5 |
| Ozonschutzwachs Antilux 654 (Rheinchemie) | 1,5 | 1,5 |
| Antioxidans Vulkanox 4020 (Bayer AG) | 1 | 1 |
| Antioxidans Vulkanox HS (Bayer AG) | 1 | 1 |
| Schwefel | 1,5 | 1,5 |
| Beschleuniger Vulacit CZ (Bayer AG) | 1,5 | 1,5 |
| Beschleuniger Vulkacit D (Bayer AG) | 2 | 2 |
| | | |
| Mischungsviskosität ML 1+4 (100°C) | 91 | 70 |
| | | |
| Vulkanisationsverhalten im Monsanto Rheometer bei 160°C | | |
| ts 01 (Min.) | 0,43 | 0,89 |
| t 90 (Min.) | 16,3 | 14,8 |
| | | |
| Vulkanisation bei 160°C: | 35 | 30 Min. |
| Spannungswert bei 100 % Dehnung (MPa) | 3,0 | 4,2 |
| Spannungswert bei 300 % Dehnung (MPa) | 13,6 | 12,5 |
| Bruchdehnung (%) | 370 | 313 |
| Härte bei 23°C (Shore A) | 72 | 73 |
| Rückprallelastizität bei 23°C (%) | 27 | 30 |
| Rückprallelastizität bei 70°C (%) | 50 | 60 |
| Abrieb (mm³) nach DIN 53 516 | 75 | 95 |
| tan delta bei 0°C (Roelig) | 0,407 | 0,457 |
| tan delta bei 60°C (Roelig) | 0,151 | 0,077 |

## Patentansprüche

1. Oberflächenbehandelte, oxidische oder silikatische Füllstoffe, hergestellt durch Veresterung eines oxidischen oder silikatischen Füllstoffes mit 0,1 bis 50 Gew.-Teilen einer hydroxylgruppenhaltigen ungesättigten Verbindung und Behandlung mit 0,1 bis 50 Gew.-Teilen Schwefel oder Schwefelspender, jeweils bezogen auf 100 Gew.-Teile eingesetzten Füllstoff, wobei die Umsetzungen entweder nacheinander oder gemeinsam durchgeführt werden können.

2. Oberflächenbehandelte, oxidische oder silikatische Füllstoffe nach Anspruch 1, **dadurch gekennzeichnet, daß** die Veresterung der hydroxylgruppenhaltigen ungesättigten Verbindungen mit den oxidischen oder silikatischen Füllstoffen bei Raumtemperatur bis Zersetzungstemperatur der hydroxylgruppenhaltigen Verbindungen durchgeführt wird und die Temperatur der Behandlung mit Schwefel oder Schwefelspender Raumtemperatur bis 250°C beträgt.

3. Oberflächenbehandelte, oxidische oder silikatische Füllstoffe nach Anspruch 1, **dadurch gekennzeichnet, daß** die Umsetzungen mit Schwefel oder Schwefelspendern und die Umsetzung mit hydroxylgruppenhaltigen organischen Verbindungen im Vakuum oder bei Drücken von 1 bis 100 atm durchgeführt werden.

4. Oberflächenbehandelte, oxidische oder silikatische Füllstoffe nach Anspruch 1, **dadurch gekennzeichnet, daß** sie Methanolbenetzbarkeiten von 0-55 % aufweisen.

5. Oberflächenbehandelte, oxidische oder silikatische Füllstoffe gemäß Anspruch 1, **dadurch gekennzeichnet, daß** sie weitere Vulkanisationshilfsmittel und Füllstoffaktivatoren in Mengen von 0-50 Gew.-Teilen bezogen auf jeweils eingesetzten Füllstoff in freier oder chemisch gebundener Form enthalten.

6. Verwendung der oberflächenmodifizierten, oxidischen oder silikatischen Füllstoffe nach Anspruch 1 zur Herstellung von Kautschukvulkanisaten.

7. Verwendung der oberflächenmodifizierten, oxidischen oder silikatischen Füllstoffe nach Anspruch 1 zur Herstellung von Reifen.

## Claims

1. Surface-treated oxide or siliceous fillers, prepared by esterification of an oxide or siliceous filler with from 0.1 to 50 parts by weight of an unsaturated compound containing hydroxyl groups and treatment with from 0.1 to 50 parts by weight sulfur or sulfur donor, in each case based on 100 parts by weight of filler used, the reactions being carried out either in succession or together.

2. Surface-treated oxide or siliceous fillers according to claim 1, **characterised in that** the esterification of the unsaturated compounds containing hydroxyl groups with the oxide or siliceous fillers is carried out at room temperature up to the decomposition temperature of the compounds containing hydroxyl groups and the temperature of the treatment with the sulfur or sulfur donor is from room temperature up to 250°C.

3. Surface-treated oxide or siliceous fillers according to claim 1, **characterised in that** the reactions with sulfur or with sulfur donors and the reaction with organic compounds containing hydroxyl groups is carried out in a vacuum or at pressures of from 1 to 100 atm.

4. Surface-treated oxide or siliceous fillers according to claim 1, **characterised in that** they exhibit values of 0 to 55% for the wettability by methanol.

5. Surface-treated oxide or siliceous fillers according to claim 1, **characterised in that** they contain, in free or chemically bound form, other vulcanisation assistants and filler activators in quantities of from 0 to 50 parts by weight, based on filler used in each case.

6. Use of the surface-modified oxide or siliceous fillers according to claim 1 for the preparation of rubber vulcanisates.

7. The use of the surface-modified oxide or siliceous fillers according to claim 1 for the production of tyres.

## Revendications

1. Matières de charge de types oxydes ou silicates traitées en surface, préparées par estérification d'une matière de charge de type oxyde ou silicate par 0,1 à 50 parties en poids d'un composé insaturé portant des groupes hydroxy et traitement par 0,1 à 50 parties en poids de soufre ou d'un fournisseur de soufre, dans les deux cas pour 100 parties en poids de la matière de charge mise en oeuvre, les réactions étant réalisées successivement ou simultanément.

2. Matières de charge de types oxydes ou silicates, traitées en surface, selon la revendication 1, **caractérisées en ce que** l'estérification des composés insaturés à groupes hydroxy par les matières de charge de types oxydes ou silicates est réalisée à des températures comprises entre la température ambiante et la température de décomposition des composés à groupes hydroxy et le traitement par le soufre ou le fournisseur de soufre est réalisé à des températures allant de la température ambiante à 250°C.

3. Matières de charge de types oxydes ou silicates, traitées en surface, selon la revendication 1, **caractérisées en ce que** la réaction avec le soufre bu le fournisseur de soufre et la réaction avec le composé organique à groupes hydroxy sont réalisées sous vide ou sous des pressions allant de 1 à 100 atmosphères.

4. Matières de charge de types oxydes ou silicates, traitées en surface, selon la revendication 1, **caractérisées en ce qu'**elles présentent une mouillabilité par le méthanol de 0 à 55 %.

5. Matières de charge de types oxydes ou silicates, traitées en surface, selon la revendication 1, **caractérisées en ce qu'**elles contiennent d'autres produits auxiliaires de vulcanisation et activateurs des matières de charge en quantités de 0 à 50 parties en poids par rapport à la matière de charge mise en oeuvre, et à l'état libre ou chimiquement combiné.

6. Utilisation des matières de charge de types oxydes ou silicates, modifiées en surface selon la revendication 1, pour la fabrication de vulcanisats de caoutchouc.

7. Utilisation des matières de charge de types oxydes ou silicates, modifiées en surface selon la revendication 1, pour la fabrication de pneumatiques.
